(19) **Europäisches Patentamt**
**European Patent Office**
**Office européen des brevets**

(11) **EP 3 821 698 B1**

(12) **EUROPEAN PATENT SPECIFICATION**

(45) Date of publication and mention
of the grant of the patent:
**26.03.2025 Bulletin 2025/13**

(21) Application number: **19834134.9**

(22) Date of filing: **01.07.2019**

(51) International Patent Classification (IPC):
**A01G 7/00** *(2006.01)* **A01G 22/05** *(2018.01)*
**A01G 7/04** *(2006.01)* **A01G 31/06** *(2006.01)*

(52) Cooperative Patent Classification (CPC):
**A01G 7/045; A01G 22/05; A01G 31/06;**
F21Y 2113/30; F21Y 2115/10; Y02P 60/21

(86) International application number:
**PCT/JP2019/026126**

(87) International publication number:
**WO 2020/013011 (16.01.2020 Gazette 2020/03)**

(54) **CULTIVATION DEVICE AND CULTIVATION METHOD FOR SOLANACEOUS SEEDLINGS**

KULTIVIERUNGSVORRICHTUNG UND KULTIVIERUNGSVERFAHREN FÜR
NACHTSCHATTENSETZLINGE

SYSTÈME DE CULTURE ET PROCÉDÉ DE CULTURE POUR DES SEMIS DE SOLANACÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2018 JP 2018133358**

(43) Date of publication of application:
**19.05.2021 Bulletin 2021/20**

(73) Proprietor: **Mitsubishi Chemical Aqua Solutions
Co., Ltd.
Chuo-ku, Tokyo 103-0021 (JP)**

(72) Inventors:
• **FUSE, Junya**
**Tokyo 103-0021 (JP)**
• **NAKAMINAMI, Akio**
**Tokyo 103-0021 (JP)**

(74) Representative: **Hoffmann Eitle
Patent- und Rechtsanwälte PartmbB
Arabellastraße 30
81925 München (DE)**

(56) References cited:
EP-A1- 2 923 561    WO-A1-2017/208906
WO-A1-2017/208906   JP-A- 2005 046 072
JP-A- 2007 267 616   JP-A- 2007 511 202
JP-A- 2013 066 394   JP-A- 2016 010 396
JP-A- 2016 202 124   US-A1- 2012 198 762
US-A1- 2012 218 750  US-A1- 2013 255 150

• "Vegetable Grafting", 1 May 2017, ISBN:
978-1-78064-897-2, article COLLA G ET AL: "2
Genetic Resources for Rootstock Breeding",
pages: 22 - 69, XP093175567

**Description**

Technical field

The present invention relates to a cultivation apparatus and a cultivation method for cultivating a seedling of a Solanaceae plant using an artificial light source according to the independent claims as appended.

More specifically, the present invention relates to a cultivation apparatus and a cultivation method for suppressing growth disorders when cultivating a seedling of a Solanaceae plant.

Background Art

A method of cultivating a plant using an artificial light source in a closed environment is a plant cultivation method in which the cultivation environment of a plant is controlled by using a lighting device, an air conditioner, a carbon dioxide application device, an irrigation device, or the like. Therefore, when this method is used for plant seedling production, environmental conditions of the space required for cultivation can be adjusted to the optimum state for the growth of seedlings of the plant, wherein the conditions include light quality, light irradiation intensity, irradiation time, temperature, humidity, carbon dioxide concentration, irrigation amount, and fertilizer application amount.

There have been many practical examples and research reports on cultivation of leafy vegetables in a closed environment using LED lighting as an artificial light source. On the other hand, it has been considered difficult to cultivate fruit vegetable seedlings, especially tomato seedlings, in a closed environment using LED lighting.

In recent years, even in the cultivation of fruit vegetable seedlings, a method using LED lighting has been studied. For example, Patent Literature 1 (JP2016-202072A) discloses a light emitting device including a blue LED, a red light emitting phosphor, and a green light emitting phosphor for irradiating tomato seedlings with light in a combined and mixed manner. In the light emitting device, the emission spectrum has a first peak wavelength in the range of 420 to 460 nm, a second peak wavelength in the range of 520 to 570 nm, and a third peak wavelength in the range of 610 to 660 nm. The light emission is characterized in that the relative emission intensity value of the third peak wavelength is 1.2 times or more and 1.6 times or less of the relative emission intensity value of the second peak wavelength.

However, when fruit vegetable seedlings are cultivated in a closed environment, protruding humps occur on the leaves and stems of the seedlings, and when they become severe, symptoms of growth disorders such as leaf curling, yellowing, necrosis, and leaf fall have been frequently reported. The symptom is so-called as "leaf humposis", "vesicular disease" or "intumescence".

As a method for suppressing damage occurring in fruit vegetable seedlings, for example, Patent Literature 2 (JP2016-202050A) discloses a light source unit for suppressing physiological disorders of a plant comprising a main light source and an auxiliary light source, wherein the main light source irradiates light having a spectrum in which at least one peak exists in a wavelength range of 400 nm or more and 700 nm or less; and the auxiliary light source irradiates light having a spectrum having at least one peak in a wavelength range of 280 nm or more and less than 400 nm.

JP 2016 202124 A forms part of the state of the art relative to the present disclosure.

Summary of Invention

Technical Problem

In the method of suppressing growth disorders by irradiating ultraviolet rays as in Patent Literature 2, ultraviolet rays may be harmful to the human body and plants. In addition, ultraviolet rays may accelerate the deterioration of materials used for cultivation and may cause ultraviolet damage to plants. An object of the present invention is to provide a cultivation device and a cultivation method capable of solving the above problems, suppressing the occurrence of intumescence, and stably cultivating high-quality seedlings of Solanaceae plants.

Until now, when cultivating plants using an artificial light source, it has been common to use lighting that predominantly emits red light, which is the absorption wavelength of phytochrome. As a result of repeated studies to solve the above problems, the present inventors have found a method to suppress the occurrence of intumescence in seedlings of Solanaceae plants by using a specific light source device for the cultivation device for cultivating the seedlings of Solanaceae plants, the light source device having the photon flux density predominant in the wavelength range of blue light. That is, the present invention is based on such findings, and has the following gist.

Solution to Problem

[1] According to a first aspect of the present invention, there is provided a cultivation apparatus as recited in claim 1 below.

[2] One embodiment provides a cultivation apparatus according to [1], wherein the lighting device does not substantially irradiate light in the ultraviolet region.

[3] One embodiment provides a cultivation apparatus according to [1] or [2], wherein the lighting device is an LED lighting device.

[4] One embodiment provides a cultivation apparatus according to any one of [1] to [3], wherein the lighting device has at least one peak of photosynthetic photon flux density in a wavelength range of 400 nm or more and less than 500 nm.

[5] One embodiment provides a cultivation apparatus according to any one of [1] to [4], wherein the cultivation device is arranged in a closed structure; wherein an air conditioning unit is provided to air-condition the inside of the closed structure; and wherein a irrigation device for irrigating the seedlings is provided.

[6] Thecultivation apparatus according to any one of [1] to [5] is a multistage shelf typed cultivation apparatus.

[7] One embodiment provides a cultivation apparatus according to any one of [1] to [6], wherein the lighting device is provided as a lighting device for suppressing physiological disorders of Solanaceae plants.

[8] According to a second aspect of the present invention, there is provided a cultivation apparatus as recited in claim 6 below.

[9] One implementation provides a cultivation method according to [8], wherein the seedling of the Solanaceae plant is a tomato.

[10] One implementation provides a cultivation method according to [8] or [9], wherein the seedlings of the Solanaceae plant are used for grafting.

[11] One implementation provides a cultivation method according to [10], wherein the seedling of the Solanaceae plant is a rootstock variety for grafting.

[12] One implementation provides a cultivation method according to any one of [8] to [11], wherein the seedlings of the Solanaceae plant are cultivated up to a growth stage of a plant height of 3 cm or more or one or more true leaves.

[13] One implementation provides a cultivation method according to any one of [8] to [12], wherein the seedlings are in a closed structure where humidity is 30% or more and 100% or less.

[14] One implementation provides a method for cultivating plug seedlings using the cultivation method according to any one of [8] to [13].

Advantageous Effects of Invention

According to the cultivation apparatus and cultivation method for seedlings of Solanaceae plants of the present invention, it is possible to suppress the occurrence of intumescence of seedlings of Solanaceae plants and stably cultivate high-quality seedlings.

Brief Description of Drawings

[Fig. 1] Figs. 1a and 1b are horizontal sectional views of a plant cultivation apparatus according to an embodiment. Fig. 1a is a sectional view taken along a line Ia-Ia in Fig.2b. Fig. 1b is a sectional view taken along a line Ib-Ib in Fig.2b.

[Fig. 2] Fig. 2a is a sectional view taken along a line IIa-IIa in Fig. 1a. Fig. 2b is a sectional view taken along a line IIb-IIb in Fig. 1a.

[Fig. 3] Fig. 3 is a front view of the plant growth module of multistage rack type according to the embodiment.

[Fig. 4] Fig. 4 is a sectional view taken along a line IV-IV in Fig. 3.

[Fig. 5] Fig. 5 is a plan view of a tray used in the plant cultivation apparatus of multistage rack type according to the embodiment.

[Fig. 6] Fig. 6 is a perspective view of the tray of Fig. 5.

[Fig. 7] Fig. 7 is a sectional view taken along a line VII-VII in Fig. 5.

[Fig. 8] Fig. 8 is a bottom view of an artificial lighting device.

[Fig. 9] Fig. 9 is a sectional view taken along a line IX-IX in Fig. 8.

[Fig. 10] Fig. 10 is a sectional view of a tray used in a plant cultivation apparatus of multistage rack type according to another embodiment.

[Fig. 11] Fig. 11 is a graph showing the spectroscopic photosynthetic photon flux density in Example 1.

[Fig. 12] Fig. 12 is a graph showing the spectroscopic photosynthetic photon flux density in Example 2.

[Fig. 13] Fig. 13 is a graph showing the spectroscopic photosynthetic photon flux density in Example 3.

[Fig. 14] Fig. 14 is a graph showing the spectroscopic photosynthetic photon flux density in Comparative Example 3.

[Fig. 15] Fig. 15 is a graph showing the spectroscopic photosynthetic photon flux density in Comparative Example 5.

Description of Embodiments

«Applicable plants»

In the present invention, the seedling refers to a young plant, preferably a seeding for transplant used for planting in another cultivation place such as a greenhouse or a field.

In one aspect of the present invention, when the cultivation apparatus is arranged in a closed structure, the height of an above-ground portion of the seedlings is preferably 50 cm or less, more preferably 40 cm or less, and further more preferably 30 cm or less.

The plant seedlings include those grown from seeds, those increased by cuttings and herbaceous cuttings, those increased by strain division, and those increased by tissue culture. In the present invention, the seedlings of Solanaceae plants include those grown by any method.

The cultivation apparatus and cultivation method of the present invention are for cultivating seedlings of Solanaceae plants. The Solanaceae plant is not particularly limited, and any of them can be applied, and examples thereof include tomato, eggplant, green pepper, paprika, green pepper, capsicum, habanero, jalapeno and the like. In the present invention, the Solanaceae plants are more preferably tomatoes, peppers, paprika and eggplants, and particularly preferably tomatoes (Solanum lycopersicum).

In the present invention, the tomato variety is not particularly limited, and any of them can be applied. The tomato varieties are, for example, Momotaro, Momotaro T93, CF Momotaro York, Momotaro Peace, Momotaro Natsumi, CF Momotaro Haruka, CF House Momotaro, House Momotaro, CF Momotaro Fight, Momotaro York, Momotaro 8, Momotaro Grande, Momotaro J, Momotaro Fight, Rinka 409, Reika, Reiyo, Aiko, Frutica, Syubi, Yubi, Kanbi, Misora 64, Amafuku, Taibyo Ryufuku, Ichifuku, SR Saifuku, Kantaro Jr. , Kangeki 73, Levanzo RZ, Louis 60, Chika, Sun Road, My Rock, Rokusanmaru, Kosuzu SP, Lovely 40, Koku Aji, Super Midi, Super First, Amalfi's Temptation, Marrakechian Hip, 7114, etc.. Among them, Momotaro, Momotaro T93, Momotaro Peace, Momotaro Natsumi, Momotaro Peace, CF Momotaro Haruka, Rinka 409, Reika, Aiko, Frutica, Syubi, Yubi, Kanbi, Misora 64, Amafuku, Taibyo Ryufuku, Ichifuku , SR Saifuku, Kantaro Jr. , Kangeki 73, Levanzo RZ are preferred. According to this, the effect of suppressing the occurrence of intumescence is remarkable.

In one aspect of the present invention, the seedlings of Solanaceae plants are preferably used for grafting. Further, in one aspect of the present invention, the seedlings of Solanaceae plants are more preferably rootstock varieties for grafting. As a result, the effect of suppressing the occurrence of intumescence is remarkable. The rootstock varieties for grafting are not particularly limited, but include, Arnold, B barrier, Receive, Maxifort, Doctor K, Kagemusha, Anchor T, Bespa, Gardner, Volunti, Green guard, Green Force, Green Save, Block, Support, Magnet, Friendship, Back Attack, Assist, LS-89, Ganbarune, Ganbarune No. 3, Ganbarune No. 11, Konkurabe, Suketto, Ryoen, Super Ryoen, Relief ace, Kyoken, Caddy No. 1 etc.. Among them, Arnold, B barrier, Receive, and Maxifort are more preferable as the rootstock varieties for grafting used in the present invention. According to this, the effect of suppressing the occurrence of intumescence is remarkable.

Further, the seedlings of Solanaceae plants used in the present invention are preferably plug seedlings. The plug seedlings are seedlings raised in cell-shaped connecting pots molded from plastic or the like, and are transplanted to a field or the like after forming a root pot. Plug seedlings are cultivated at a higher density than cultivation methods that use individual seedling pots or individual pots, so it is difficult to uniformly irradiate the leaves with light, resulting that the leaves tend to be placed behind adjacent leaves, whereby the leaves are arranged in a direction different from the direction in which the light is irradiated, and a shaded part is likely to occur.

In the present invention, the lighting device having the light source constituting a spectrum showing a wavelength range A of 400 nm or more and less than 500 nm and a wavelength range B of 500 nm or more and less than 700 nm is used. The light emitted from this light source easily forms reflected light, and can be adjusted so that all seedlings and leaves are irradiated with an appropriate amount of light. As a result, even when many seedlings are cultivated at one time, the occurrence of growth disorders such as intumescence can be effectively suppressed. Therefore, according to the present invention, the side surface forming the shelf of the seedling cultivation apparatus is a reflector. The reflector is not particularly limited, and examples thereof include a white resin plate, an aluminum plate, and a white-painted steel plate.

«Confirmation of the onset of intumescence»

In the method for cultivating seedlings of Solanaceae plants of the present invention, it is preferable to confirm the onset of intumescence immediately before planting. Therefore, it is preferable that confirming the onset of intumescence and planting seedlings are performed at a time when the growth stage is appropriate depending on the type of plant to be cultivated. Specifically, for example, it is preferable that seedlings of Solanaceae plants are cultivated with the cultivation apparatus of the present invention until the plant height is 3 cm or more and 40 cm or less, or the number of true leaves is 1 or more and 10 or less, and the onset of intumescence is confirmed. In the cultivation apparatus of the present invention provided with the lighting device, intumescence can be effectively suppressed by the conditions that the period for cultivating the seedlings of Solanaceae plants is shortened within such a range, and the planting is carried out in another field or the like irradiated with sunlight or the like. Further, in the cultivation apparatus of the present invention, by shortening the period for cultivating the seedlings of Solanaceae plants and planting the seedlings at an early stage, the cultivation apparatus can be made into a multistage shelf type, which is possible to cultivate a large number of seedlings effectively in a limited space, which is preferable. On the other hand, in the cultivation apparatus of the present invention provided with the lighting device, by prolonging the period for cultivating the seedlings of Solanaceae plants within such a range, the seedlings of Solanaceae grow sufficiently, and the seedlings grow after planting and rooting after grafting become smooth.

The more preferable growth stage in which the seedlings of Solanaceae plants are cultivated in the cultivation apparatus of the present invention will be described below.

In one aspect of the present invention, for example, it is preferable that tomato seedlings are cultivated up to a growth stage where the plant height is 3 cm or more and 40 cm or less, or the number of true leaves is 1 or more and 10 or less, and no intumescence develops. Further, it is more preferable that the tomato seedlings are cultivated up to the growth stage where the plant height is 5 cm or more and 30 cm or less, or the number of true leaves is 2 or more and 8 or less, and no intumescence develops.

In addition, considering multistage cultivation using a closed structure, it is preferable to cultivate up to the growth stage of plant height 25 cm or less or 8 true leaves or less with the cultivation apparatus of the present invention without intumescence. It is more preferable to cultivate such that the plant height is 20 cm or less, or the number of true leaves is 6 or less.

Furthermore, when Solanaceae seedlings are used for grafting, or when rootstock varieties for grafting are used, it is preferable to cultivate to a growth stage where the plant height is 15 cm or less or the number of true leaves is 4 or less without intumescence. As many rootstock varieties for grafting are prone to develop intumescence, it is preferable to cultivate them using a lighting device until such a growth stage, and then plant in another field irradiated with sunlight or the like. According to this, the effect of suppressing the occurrence of intumescence is remarkable. Therefore, when the seedlings of Solanaceae are used for grafting, or when the rootstock variety for grafting is used, it is more preferable to cultivate the plants in the cultivation apparatus of the present invention provided with the lighting device up to the growth stage where the plant height is 13 cm or less or the number of true leaves is 3 or less, and then plant them in the field.

In addition, intumescence is more likely to develop as the seedlings are cultivated for a longer period of time, the number of true leaves developed increases, and the seedlings grow; accordingly, in one aspect of the present invention, the seedlings can be cultivated by the cultivation apparatus of the present invention up to the growth stage of a plant height of 5 cm or more or one or more true leaves. Furthermore, it is more preferable to cultivate up to a growth stage with a plant height of 10 cm or more or two or more true leaves, and depending on the application, cultivate up to a growth stage with a plant height of more than 15 cm or four or more true leaves with the cultivation apparatus of the present invention.

«Cultivation apparatus»

«Lighting device»

In the present invention, the cultivation apparatus includes a lighting device for cultivating seedlings of Solanaceae plants. Preferably, in the present invention, the cultivation apparatus includes a lighting device for suppressing physiological disorders of Solanaceae plants. The lighting device has a light source that irradiates a wavelength range A of 400 nm or more and less than 500 nm, and a wavelength range B of 500 nm or more and less than 700 nm. The lighting device irradiates the wavelength range A and the wavelength range B at the same time. The lighting device may include the light source forming the spectrum showing the wavelength range A and the light source forming the spectrum showing the wavelength range B respectively, or the lighting device may include one light source showing the wavelength range A and the wavelength range B. Therefore, the lighting device may include one or a plurality of light sources constituting a spectrum showing only the wavelength range A, a light source forming a spectrum showing only the wavelength range B, and a light source forming a spectrum showing both the wavelength range A and the wavelength range B, so that the photosynthetic photon flux density ratios of the wavelength range A and the wavelength range B can be set to a specific range. The photosynthetic photon flux density in the wavelength range A is 100 $\mu$mol/m$^2$/sec or more. When the total of the photosynthetic photon flux density in the wavelength range A and the photosynthetic photon flux density in the wavelength range B is 100%, the photosynthetic photon flux density in range A is 81% or more and less than 99%. In the present invention, the photosynthetic photon flux density means photosynthetic photon flux density measured on the cultivation surface of seedlings. Specifically, it is a value measured by arranging the light receiving surface of the spectral irradiance meter horizontally and upward at the position of the leaf of the seedling.

In the present invention, the lighting device used in the cultivation apparatus has a photosynthetic photon flux density in the wavelength range A of 100 $\mu$mol/m$^2$/sec or more, preferably 150 $\mu$mol/m$^2$/sec or more, more preferably 180 $\mu$mol/m$^2$/sec or more, and further more preferably 200 $\mu$mol/m$^2$/sec or more, and particularly preferably 220 $\mu$mol/m$^2$/sec

or more. By setting the photosynthetic photon flux density of the cultivation surface of the wavelength range A to the above range, the occurrence of intumescence in the seedlings of Solanaceae plants can be suppressed, and normal seedlings can be stably cultivated.

The upper limit of the photosynthetic photon flux density of the wavelength range A is not particularly limited, but is preferably 1200 $\mu$mol/m$^2$/sec or less, more preferably 1000 $\mu$mol/m$^2$/sec or less, and further more preferably 700 $\mu$mol/m$^2$/sec or less on considering the influence of heat generated from the light source on plant growth.

In the present invention, in the lighting device, the photosynthetic photon flux density of the wavelength range B is preferably 200 $\mu$mol/m$^2$/sec or less, more preferably 100 $\mu$mol/m$^2$/sec or less, further more preferable 80 $\mu$mol/m$^2$/sec or less, and particularly preferably 50 $\mu$mol/m$^2$/sec or less. By setting the photosynthetic photon flux density of wavelength range B to the above range, the occurrence of intumescence of Solanaceae plant seedlings is suppressed, the spindly growth is suppressed, and seedlings having short and stable hypocotyls and petioles, and having good quality can be cultivated stably. The lower limit of the photosynthetic photon flux density of the wavelength range B is not particularly limited, but is preferably more than 0 $\mu$mol/m$^2$/sec, more preferably more than 1 $\mu$mol/m$^2$/sec, and particularly preferably more than 3 $\mu$mol/m$^2$/sec.

In the present invention, the spectrum of the light source included in the lighting device has the photosynthetic photon flux density in the wavelength range A of 81% or more and less than 99%,when the total of the photosynthetic photon flux density in the wavelength range A and the photosynthetic photon flux density in the wavelength range B is 100%. That is, the photosynthetic photon flux density in the wavelength range B is 1% or more and less than 30%, when the total of the photosynthetic photon flux density in the wavelength range A and the photosynthetic photon flux density in the wavelength range B is 100%. The photosynthetic photon flux density in the wavelength range A is preferably 80% or more, more preferably 85% or more. By setting the lower limit of the wavelength range A to the above range, the occurrence of intumescence can be suppressed. The photosynthetic photon flux density in the wavelength range A is preferably 98% or less, more preferably 97% or less. By setting the upper limit of the wavelength range A to the above range, it is possible to prevent the spindly growth of seedlings and to cultivate high-quality seedlings with short hypocotyls and petioles.

In the present invention, the spectrum of the light source included in the lighting device has preferably at least one peak of photon flux density in a wavelength range A (hereinafter, may be referred to as "first emission peak wavelength") of 400 nm or more and less than 500 nm. Further, the first emission peak wavelength preferably has a half width of 60 nm or less, more preferably 40 nm or less, and further more preferably 30 nm or less. This makes it possible to suppress abnormalities in the morphogenesis of seedlings and to cultivate normal seedlings more efficiently.

The spectrum of the light source of the lighting device used in the seedling cultivation apparatus of the present invention preferably has a peak of photon flux density in the wavelength range B (hereinafter, may be referred to as "second emission peak wavelength") of 500 nm or more and less than 700 nm.

It is preferable that the spectrum of the light source included in the lighting device used in the cultivation apparatus of the present invention does not substantially contain ultraviolet rays. Specifically, the spectrum is preferable not to contain ultraviolet rays having a wavelength of less than 280 nm, which is harmful to the human body and plants, more preferably not to contain ultraviolet rays having a wavelength of less than 295 nm, further more preferably not to contain ultraviolet rays having a wavelength of less than 380 nm, and further more preferably not to contain ultraviolet rays having a wavelength of less than 400 nm.

The spectrum of the light source included in the lighting device used in the cultivation apparatus of the present invention can suppress the occurrence of intumescence even if it does not contain ultraviolet rays having a wavelength of less than 400 nm. The term "substantially free of ultraviolet rays" means that the photon flux density in the identified wavelength range is preferably 3 $\mu$mol/m$^2$/sec or less, more preferably 1 $\mu$mol/m$^2$/sec or less, and particularly preferably 0 $\mu$mol/m$^2$/sec.

In the present invention, the lighting device may be any lighting device as long as it has a light source having a spectrum showing a wavelength range A of 400 nm or more and less than 500 nm and a wavelength range B of 500 nm or more and less than 700 nm. Such lighting device includes a fluorescent lamp, an organic EL, a laser diode, or an LED, which is a semiconductor lighting device. The lighting device preferably is a semiconductor lighting device, and more preferably an LED, in consideration of power consumption and easy control of finer wavelength.

In the present invention, the closed structure is a structure surrounded by a wall that does not allow light to pass through, and is preferably surrounded by a heat insulating wall. In one aspect of the present invention, the cultivation apparatus is preferably arranged in a closed structure, and includes an air conditioner for air-conditioning the inside of the closed structure and an irrigation device for irrigating the seedlings. According to this, it becomes possible to make the space where the seedlings are cultivated have various environmental conditions such as light quality, light irradiation intensity, irradiation time, temperature, humidity, carbon dioxide concentration, irrigation amount, fertilizer application amount, etc., in a state suitable for seedling growth.

The lighting device can be detachably attached to the structure with an adhesive or a magnet. According to this, it is possible to appropriately change the combination of a plurality of types of lighting devices having different wavelength ranges, and it is possible to easily adjust the spectrum of the light irradiating the plants. In particular, from the viewpoint of strength and ease of adjustment, it is preferable to attach a magnet to the back surface of the lighting device.

The humidity in the closed structure is preferably in the range of 30% or more and 100% or less, more preferably in the range of 40% or more and 99% or less, and further preferably in the range of 40% or more and 95% or less. By setting the humidity in the closed structure within the above range, the occurrence of intumescence in the seedlings of Solanaceae plants can be suppressed. Therefore, the cultivation apparatus of the present invention preferably has a humidity control mechanism. The humidity control mechanism is not particularly limited as long as it can control the humidity in the closed structure, and any of them can be used. For example, a humidifier, a dehumidifier, an air conditioner having dehumidifying function and so on can be used.

«Explanation of Multi-stage»

In one embodiment of the present invention, cultivating seedlings is conducted using a multistage shelf typed cultivation apparatus, but the present invention is not limited thereto. In one aspect of the present invention, in the multistage shelf typed cultivation device, the seedling raising shelves are arranged in multiple stages in the vertical direction to form a seedling raising space.

In one aspect of the present invention, it is preferable that the cultivation apparatus is a multistage shelf type so that many seedlings can be efficiently cultivated in a limited space.

As the number of seedlings cultivated at one time increases, as mentioned above, uniform irradiation of light becomes difficult, and the leaves are arranged behind adjacent leaves or in a direction different from the direction in which the light irradiates, whereby shadows and uneven irradiation tend to be formed with respect to the light source. In the present invention, a large number of seedlings can be irradiated with an appropriate amount of light by using a lighting device having a light source constituting a specific spectrum, for example, by utilizing the reflected light from the side surface of a white-painted shelf. As a result, even when many seedlings are grown at one time, the occurrence of growth disorders such as intumescence can be effectively suppressed.

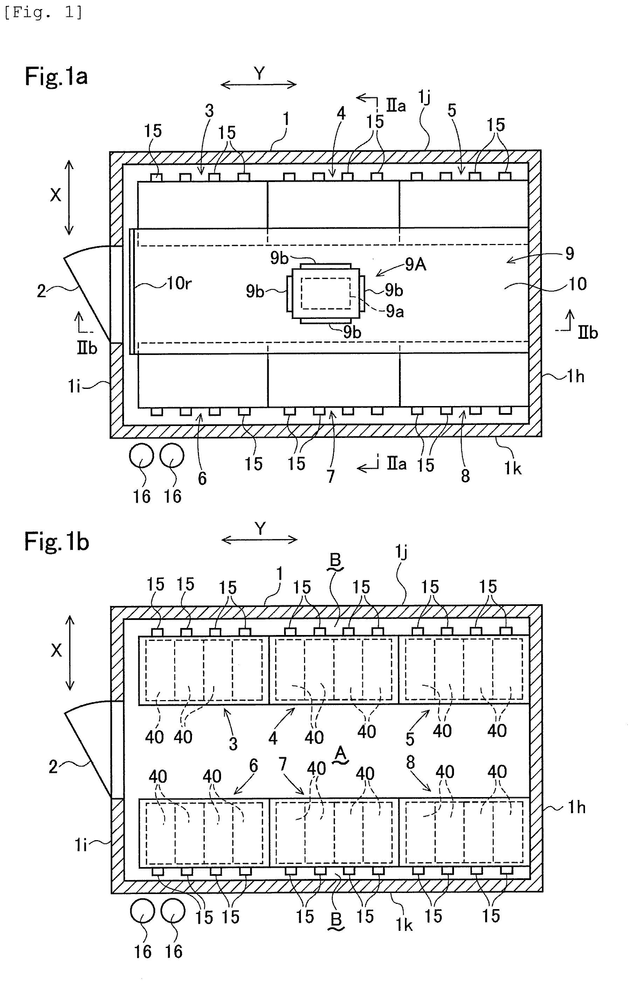

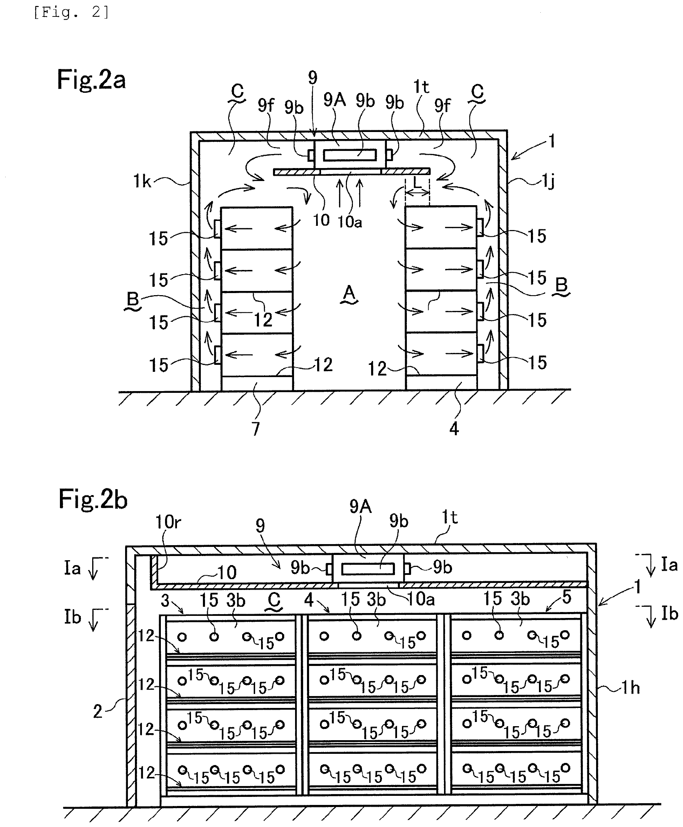

A preferred embodiment of the cultivation apparatus will be described with reference to Figs. 1a to 9 and Fig. 10. As illustrated in Figs. 1a to 2b, a plurality (six in the illustrated example) of multistage shelf typed cultivation apparatuses 3 to 8 each having a box shape are installed in a room of a closed structure 1, which is surrounded by heat-insulating wall surfaces and is completely light-shielded. The room of the structure 1 is rectangular when viewed in plan, and a door 2 is provided in one wall surface 1i extending in a widthwise direction.

In this embodiment, the three multistage shelf typed cultivation apparatuses 3 to 5 are arranged in line with their open front surfaces facing in the same direction, and the three multistage shelf typed cultivation apparatuses 6 to 8 are arranged in line with their open front surfaces facing in the same direction. Thus, two rows of the multistage shelf typed cultivation apparatuses are arranged in the room with their open front surfaces opposing to each other. In the following, a direction in which the rows of the multistage shelf typed cultivation apparatuses 3 to 5 and 6 to 8 extend (i.e., a lengthwise direction of the room) is called a Y-direction, and the widthwise direction of the room (i.e., a direction in which the multistage shelf typed cultivation apparatuses 3 to 5 and the multistage shelf typed cultivation apparatuses 6 to 8 are opposed to each other) is called an X-direction depending on cases. A space A allowing one or more workers to perform work is formed between the two rows of the multistage shelf typed cultivation apparatuses 3 to 5 and 6 to 8. A space B having a width of about 50 to 500 mm is formed between lengthwise wall surfaces 1j, 1k of the room and rear surfaces of the multistage shelf typed cultivation apparatuses 3 to 8, thus forming a path for air having passed through the multistage shelf typed cultivation apparatuses 3 to 8.

Respective one ends of the rows of the multistage shelf typed cultivation apparatuses 3 to 5 and 6 to 8 are in contact with a structure wall surface 1h on the opposite side to the door 2. The respective other ends of the rows of the multistage shelf typed cultivation apparatuses 3 to 5 and 6 to 8 are slightly apart from the wall surface 1i on the same side as the door 2.

In the case where warmed-up air flows into the space A through a gap space formed adjacent to the wall surface 1i on the same side as the door 2, an air baffle plate for suppressing such a flow of the warmed-up air may be disposed at an appropriate place.

Preferably, an air curtain is installed inside the door 2 through which the workers come in and out of the room, so that outdoor air does not enter the room when the workers come in and out of the room.

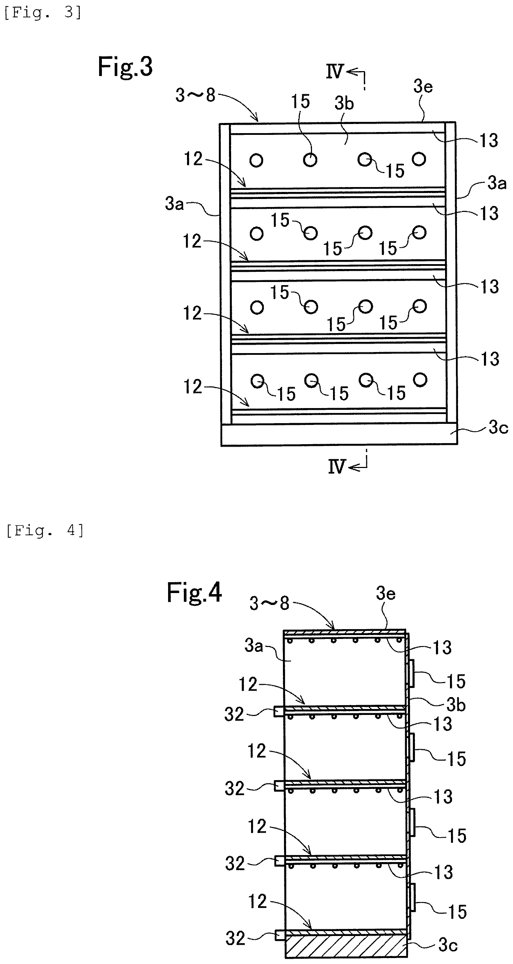

As illustrated in Figs. 3 and 4, each of the multistage shelf typed cultivation apparatuses 3 to 8 is a box-shaped structure, which is opened at its front surface and which includes a pedestal 3c, right and left side panels 3a, a rear panel 3b on the rear side, and a top panel 3e defining a ceiling portion. Inside the box-shaped structure, a plurality of seedling cultivation racks 12 is arranged in multiple stages at certain intervals in the vertical direction.

Each of the multistage shelf typed cultivation apparatuses 3 to 8 has a height of about 2000 mm, i.e., such a height as allowing the workers to carry out the operations on all the stages. Preferably, a width of the seedling cultivation rack 12 is set to such a value, e.g., about 1000 mm to 2000 mm, that a plurality of resin-made plug trays, each containing several tens to several hundreds cells (small pots) arrayed in a grid pattern, can be placed side by side, and that the temperature and the humidity in an upper space above each rack 12 can be adjusted to be kept constant. Furthermore, preferably, a depth of the seedling cultivation rack 12 is set to 500 mm to 1000 mm. A plurality of cell trays 40 (see Fig. 1b) are substantially horizontally placed on each plant cultivation rack 12. In general, dimensions of one plug tray are about 300 mm in width and about 600 mm in length.

The seedling cultivation rack 12 in the lowermost stage is placed on the pedestal 3c. Levelness of the seedling cultivation rack 12 can be adjusted by an adjuster (not illustrated) that is provided on the pedestal 3c.

An irrigation device 30, described later, is provided in each seedling cultivation rack 12.

Lighting devices 13 are disposed at respective lower surfaces of the seedling cultivation racks 12 in the second or higher stages and of the top panel 3e such that light from each lighting device 13 is applied to plants growing in the plug trays 40 on the seedling cultivation rack 12 positioned just under the relevant artificial lighting device 13. In this embodiment, the lighting device 13 except for one in the uppermost stage is mounted to a lower surface of an irrigation tray 31 described later.

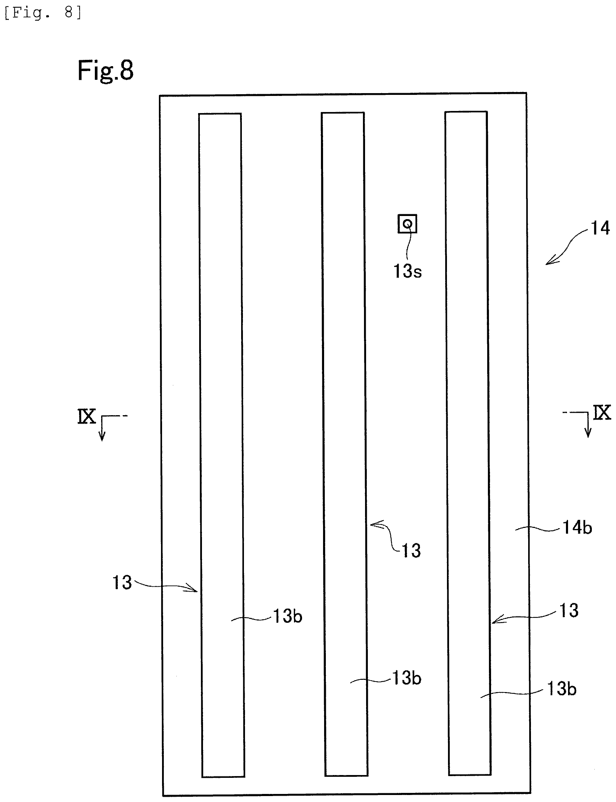

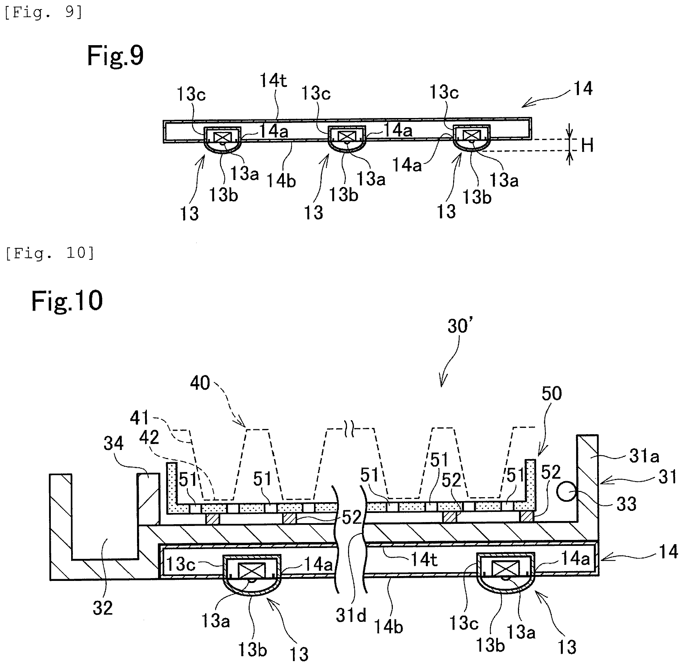

Figs. 8 and 9 illustrate details of structure of the lighting device 13. Fig. 8 is a bottom view of a box having the lighting device 13, and Fig. 9 is a sectional view taken along a line IX-IX in Fig. 8.

The bottom plate 14b of the box 14 is provided with an elongated opening 14a, and the lighting device 13 is installed so as to fit into the opening 14a. The lighting device 13 includes a case 13c installed in the box 14 so as to face the opening 14a, a light source 13a installed in the case 13c, a synthetic resin cover 13b covering the lower surface of the case 13c. The cover 13b is detachably attached to the case 13c. A switch 13s is installed on the lower surface of the box 14.

The box 14 is a box-shaped body having a rectangular top plate 14t and the bottom plate 14b.

A plurality of (three in this embodiment) openings 14a elongate in the direction parallel to the long side of the rectangular bottom plate 14b. The case 13c is an elongated box-shaped body having an open lower surface, and the lower end thereof is fitted in the opening 14a.

Although not shown, the light source 13a installed in the case 13c has a substrate, a plurality of LEDs installed on the substrate as a light source, and a circuit for driving the LEDs. The substrate extends in the longitudinal direction of the case 13c, and the LEDs are installed at intervals in the longitudinal direction.

There is a gap of about 3 to 30 mm between the case 13c and the top plate 14t of the box 14. Heat generated by the lighting device 13 is transferred to the bottom plate 14b and dissipated from the bottom plate 14b. That is, it is transmitted to the air flowing through the seedling raising space under the lighting device 13.

Since there is the gap between the case 13c and the box top plate 14t in this way, the heat transferred from the light source and the drive circuit to the top plate 14t is extremely small. Therefore, it is possible to prevent the nutrient solution flowing on the irrigation tray 31 and the rhizosphere portion of the plants planted in the cell tray 40 from being heated by the heat of the lighting device 13.

The cover 13b is a long curved plate-like body having an arc-shaped or substantially elliptical arc-shaped vertical cross section and extending along the opening 14a. The cover 13b diffuses the light from the LEDs and emits it downward. In this embodiment, the lower surface of the cover 13b is the light emitting surface. The cover 13b is installed so as to be convex downward. The protruding height H of the cover 13b from the bottom plate 14b is 40 mm or less.

As illustrated in Fig. 4, ventilation openings are formed in the rear panel 3b behind respective spaces (seedling cultivation spaces) between adjacent two of the seedling cultivation racks 12 and between the seedling cultivation rack 12 in the uppermost stage and the top panel 3e, and air fans 15 are mounted respectively to the ventilation openings.

As illustrated in Fig. 4, ventilation openings are formed in the rear panel 3b behind respective spaces (seedling cultivation spaces) between adjacent two of the seedling cultivation racks 12 and between the seedling cultivation rack 12 in the uppermost stage and the top panel 3e, and air fans 15 are mounted respectively to the ventilation openings.

By arranging the air fans 15 at a back side of each seedling cultivation space, air flows uniformly in the seedling cultivation spaces, which is preferable.

An air-conditioning unit 9 with the function of adjusting temperature and humidity of the air in the room and circulating the air, which has been adjusted in temperature and humidity to be matched with setting conditions, is installed in an upper portion of the room. The air-conditioning unit 9 includes an air-conditioning unit body (air conditioner) 9A equipped with a heat exchanger, and an air guide panel 10 mounted to a lower surface of the air-conditioning unit body 9A. A compressor for the air-conditioning unit body 9A is installed outside the closed structure 1.

In this embodiment, the air-conditioning unit body 9A is positioned in a central region of the upper portion of the room when viewing the room in plan. An inlet 9a of the air-conditioning unit body 9A is provided in the lower surface of the air-conditioning unit body 9A, and an aperture 10a is formed in the air guide panel 10 at a position overlapping the inlet 9a.

The air-conditioning unit body 9A is mounted to a ceiling 1t of the closed structure and has a structure that its lateral surfaces are exposed to the interior of the room. An air outlet 9b is provided in each of four lateral surfaces of the air-conditioning unit body 9A.

A portion of the air guide panel 10 around the aperture 10a is overlapped with a portion of the air-conditioning unit body 9A around the inlet 9a. The aperture 10a has a size equal to or larger than that of the inlet 9a.

The air guide panel 10 is supported to the ceiling 1t with suspending attachments (not illustrated).

**EP 3 821 698 B1**

One end of the air guide panel 10 in the Y-direction is in contact with the wall surface 1h. The other end of the air guide panel 10 in the Y-direction extends up to a position closer to the wall surface 1i than the multistage shelf typed cultivation apparatuses 3 to 5 and 6 to 8, but it is slightly apart from the wall surface 1i. An upright plate 10r is erectly provided along an overall side of the air guide panel 10 at the other end, and an upper end of the upright plate 10r is in contact with the ceiling 1t.

The air guide panel 10 extends in the X-direction up to a region between the ceiling 1t and upper surfaces of the multistage shelf typed cultivation apparatuses 3 to 8.

As illustrated in Fig. 2a, both ends of the air guide panel 10 in the X-direction are positioned vertically above the front surfaces of the multistage shelf typed cultivation apparatuses 3 to 5 and the multistage shelf typed cultivation apparatuses 6 to 8 on the side closer to the space A, or positioned rearward of those front surfaces, namely away from those front surfaces toward the space B. A horizontal distance L between each of both the ends of the air guide panel 10 in the X-direction and corresponding one of the front surfaces of the multistage shelf typed cultivation apparatuses 3 to 5 and 6 to 8 may be 0 mm, but it is preferably not less than 30 mm, more preferably not less than 40 mm, even more preferably not less than 90 mm, and still even more preferably not less than 140 mm.

In this embodiment, spaces between both the ends of the air guide panel 10 in the X-direction and the ceiling 1i serve as blow-off openings 9f of the air-conditioning unit 9. When viewing the plant cultivation shelves in plan, the blow-off openings 9f may be overlapped with the front surfaces of the multistage shelf typed cultivation apparatuses 3 to 8, but they are preferably positioned rearward of those front surfaces through the distance

L.

In this embodiment, the inlet 9a of the air-conditioning unit body 9A serves as an intake opening of the air-conditioning unit 9. When viewing the plant cultivation shelves in plan, the intake opening is positioned forward of the front surfaces of the multistage shelf typed cultivation apparatuses 3 to 8, namely on the side closer to the space A.

Air circulation flows denoted by arrows in Fig. 2a are generated in the room by operating air fans 15. More specifically, air having been adjusted in temperature and humidity by the air-conditioning unit 9 is sucked into seedling cultivation spaces in stages of seedling cultivation racks 12 from the space A on the open front side of the multistage shelf typed cultivation apparatuses 3 to 8, and is discharged to the rear side of rear panels 3b through the air fans 15. Then, the air rises through the space B between the rear side of the rear panels 3b and the structure wall surfaces, and passes through spaces C above the multistage shelf typed cultivation apparatuses 3 to 8 to be mixed with the air blown out from the air-conditioning unit 9 and adjusted in temperature and humidity. Then, the mixed air is blown out toward the space A on the open front side of the multistage shelf typed cultivation apparatuses 3 to 8 again after passing between the air guide panel 10 and the multistage shelf typed cultivation apparatuses 3 to 8.

Part of the air going to flow into the space A after passing between the air guide panel 10 and the multistage shelf typed cultivation apparatuses 3 to 8 is sucked into the inlet 9a of the air-conditioning unit body 9A through the aperture 10a. After being adjusted in temperature and humidity, the sucked air is blown out from the blow-off openings 9f through the outlets 9b.

As illustrated in Figs. 1a to 2b, when the two rows of the multistage shelf typed cultivation apparatuses 3 to 5 and the multistage shelf typed cultivation apparatuses 6 to 8 are arrayed such that a working space is formed between the two rows, the working space serves also as the space A for air circulation, and effective circulation flows are formed.

When the circulation flows pass through the seedling cultivation spaces in the multistage shelf typed cultivation apparatuses 3 to 8, water vapor evaporated from the irrigation device, culture media, the plants, etc. and the heat released from the lighting devices 13 are entrained with the circulation flows. By circulating the circulation flows at the temperature and the humidity adjusted by the air-conditioning unit 9 at all times, the inside of the room can be kept as environment at the temperature and the humidity optimum for growth of the plants. A flow speed of the air flowing through the seedling cultivation spaces is preferably 0.1 m/sec or higher, more preferably 0.2 m/sec or higher, and even more preferably 0.3 m/sec or higher. If the speed of the air flow is too fast, there would be a risk that a problem occurs in growth of the plants. Therefore, the flow speed of the air is preferably 2.0 m/sec or lower.

While, in this embodiment, the air flow is streamed from the front surface of the seedling cultivation space to the rear-side space B of the rack through the fans 15 in a state under negative pressure, the air flow may be streamed conversely from the rear surface side to the front surface side of the rack in a state under positive pressure. However, a more uniform air flow is obtained in the seedling cultivation space by causing the air flow to stream from the front surface side to the rear surface side of the rack in a state under negative pressure.

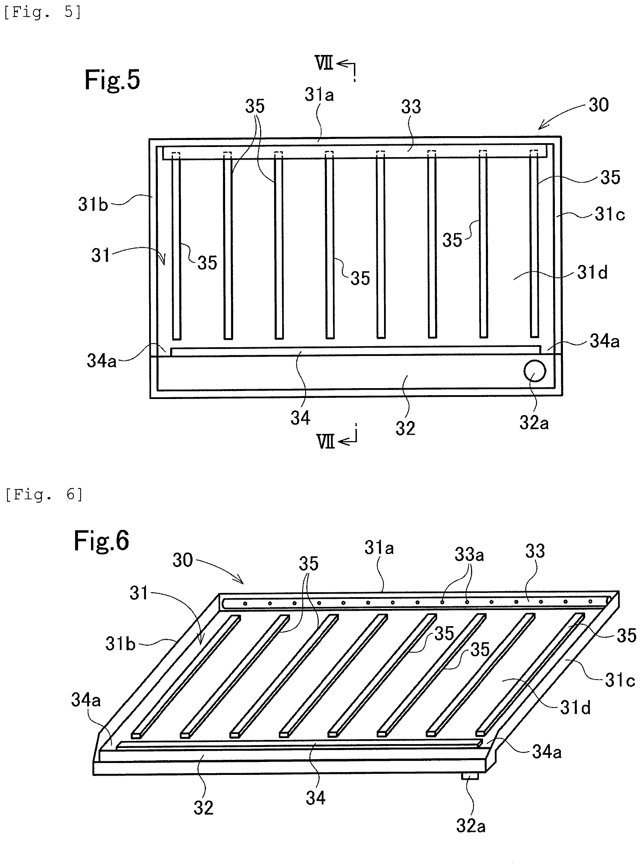

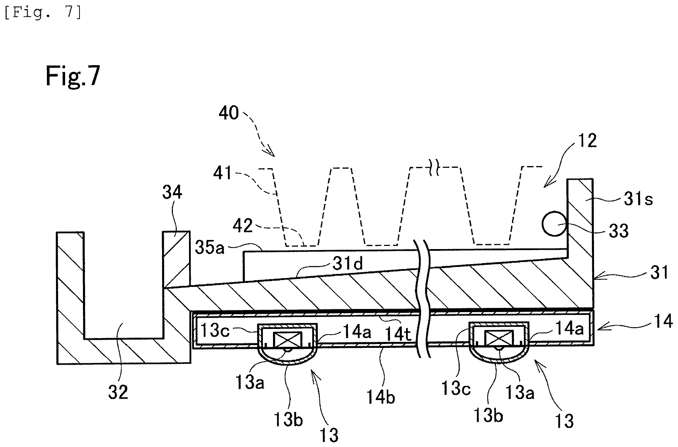

In this embodiment, a rack plate of each seedling cultivation rack 12 is constituted by the irrigation tray 31 of the irrigation device (subirrigation device) 30, and irrigation is effectuated from a bottom surface of the plug tray 40 that is placed on the irrigation tray 31. An example of a structure of the irrigation device 30 will be described below with reference to Figs. 5 to 7. Fig. 5 is a plan view of the irrigation device, Fig. 6 is a perspective view thereof, and Fig. 7 is a sectional view taken along a line VII-VII in Fig. 5.

The irrigation device 30 includes the rectangular irrigation tray 31 having sidewalls 31a, 31b and 31c that are erected respectively at a rear side and left and right lateral sides of a lower plate 31d. A drain pit 32 in continuity with the lower plate 31d of the irrigation tray 31 is formed along a front side of the irrigation tray 31 where there is no sidewall, and aide drain opening 32a is formed at one end of the drain pit 32. The drain pit 32 and the lower plate 31d are partitioned by a dam 34, and the nutrient solution flows out into the drain pit 32 from cutouts 34a that are formed at both ends of the dam 34. Furthermore, a feed pipe 33 for supplying the nutrient solution into the irrigation tray 31 is disposed to extend along the sidewall 31a erected at the rear side of the irrigation tray 31. The nutrient solution is supplied onto the tray 31 through a plurality of small holes 33a formed in the feed pipe 33.

A plurality of ribs 35, each having a height of about 7 mm, is disposed on an upper surface of the lower plate 31d of the irrigation tray to extend toward the drain pit 32 parallel to each other. The cell tray 40 is placed on the ribs 35.

The irrigation device 30 is dimensioned, as illustrated in Fig. 4, such that when the irrigation trays 31 are placed on the seedling cultivation racks 12 of the multistage shelf typed cultivation apparatuses 3 to 6, the drain pits 32 are positioned to project from the open front surfaces of the cultivation apparatuses 3 to 8. With the drain pits 32 projecting from the open front surfaces of the cultivation apparatuses, it is easier to collect the nutrient solution drained through the drain openings 32a of the drain pits 32 of the irrigation trays 31 placed in the seedling cultivation rack 12 of each stage, and to drain the nutrient solution to the outside of the closed structure 1.

When the nutrient solution is continuously supplied through the small holes 33a formed in the feed pipe 33 of the irrigation device 30, the nutrient solution is stemmed by the dam 34 and is pooled up to a predetermined level. While the nutrient solution is supplied from the feed pipe 33, the nutrient solution flows out to the drain pit 32 through the cutouts 34a a little by a little. A pooled state of the nutrient solution is preferably maintained in the irrigation tray 31 at a level of, e.g., about 10 to 12 mm by adjusting supply rate of the nutrient solution and drain rate of the nutrient solution of the cutouts 34a. The water is sucked up by the capillary action to the culture medium in each cell 41 through cell holes 42, which are formed in the bottom surface of each cell 41 in the cell tray 40 placed on the ribs 35, such that the culture media in all the cells 41 are brought into a water saturated state in a short time.

The box 14 is mounted to a lower surface of the lower plate 31d of the irrigation tray 31. While, in this embodiment, the top plate 14t of the box 14 is directly contacted with the lower surface of the irrigation tray 31, a spacer or a heat insulating material may be interposed therebetween.

In the irrigation device 30 of this embodiment, as illustrated in Fig. 7, an upper surface of the lower plate 31d of the irrigation tray 31 is inclined toward the drain pit 32. Therefore, when the irrigation is stopped, the nutrient solution can be drained to the drain pit 32 in a short time. In the case of inclining the upper surface of the lower plate 31d, the cell tray 40 placed on the ribs 35 can be horizontally held by gradually changing the height of each rib 35 such that a top 35a of the rib lies horizontally.

Fig. 10 illustrates another example of the irrigation device used in the present invention. The same members as those in Figs. 5 to 7 are denoted by the same reference signs. In an irrigation device 30' illustrated in Fig. 10, when the cell tray 40 is placed on the lower plate 31d of the irrigation tray 31, an under tray 50 is interposed between the lower plate 31d and the plug tray 40. The under tray 50 has rigidity at such a level as being able to support the plug tray 40 including the cells 41 in each of which the culture medium is put. A plurality of small holes 51 is formed in a bottom surface of the under tray 50, and a plurality of projections 52 is formed on the rear side of the under tray 50. The projections 52 function as gap holding means for holding a gap between the lower plate 31d and the bottom surface of the cell tray 40 when the cell tray 40 is accommodated in the irrigation tray 31 together with the under tray 50.

Also in the irrigation device 30' of Fig. 10, when the nutrient solution is supplied from the feed pipe 33 of the irrigation device 30' and is pooled up to a predetermined level, the nutrient solution is introduced into the under tray 50 through the small holes 51 of the under tray 50. The water is then sucked up by the capillary action to the culture medium in each cell 41 through the cell holes 42, which are formed in the bottom surface of each cell 41 in the plug tray 40.

Furthermore, in Fig. 10, the box 14 having the lighting device 13 is similarly mounted to the lower surface of the lower plate 31d of the irrigation tray 31.

As in the above-described embodiment, the cell tray 40 placed on the irrigation tray 31 is constituted as a unitary tray shape including several tens to several hundreds cells 41 arrayed in a grid pattern, and dimensions of one cell tray are about 300 mm in width and about 600 mm in length. However, the present invention is not limited to the above-described arrangement.

To artificially supply carbon dioxide consumed by seedlings for photosynthesis, as illustrated in Figs. 1a and 1b, a liquefied carbon dioxide cylinder 16 is installed outside the closed structure 1. The carbon dioxide is supplied from the liquefied carbon dioxide cylinder 16 such that a concentration of the carbon dioxide in the room, measured using a carbon dioxide concentration meter, is held constant.

By employing the above-described cultivation apparatus to cultivate seedlings, it is possible to automatically adjust environment conditions, such as a quantity of light, temperature, humidity, carbon dioxide, and water, which are suitable for the growth of the seedlings. Since all the seedlings on the seedling cultivation racks can be grown under the same environment, uniformity in quality of the cultivated seedlings can be increased.

In this embodiment, since the blow-off openings 9f of the air-conditioning unit 9 are positioned rearward of the front surfaces of the multistage shelf typed cultivation apparatuses 3 to 8 through 30 mm or more, the air warmed up while passing through the multistage shelf typed cultivation apparatuses 3 to 8 (cultivation modules) and the air cooled down by the air-conditioning unit 9 flow into the space A in a state mixed together. As a result, the air flowing into the space A becomes air having a uniform temperature, and is then taken into the multistage shelf typed cultivation apparatuses 3 to 8.

If the air cooled by the air-conditioning unit 9 directly flows into the space A, air being partly cold would be taken into the multistage shelf typed cultivation apparatuses 3 to 8 through the front surfaces. Therefore, a temperature variation would occur among the multistage shelf typed cultivation apparatuses 3 to 8, and growth of plants would be not uniform.

In this embodiment, since the air-conditioning unit body 9A and the air guide panel 10 are integrated with each other, an advantageous structure is obtained in that there is no need of installing many lines of duct piping, etc.

In the above-described the multistage shelf typed cultivation apparatuses, the heat generated from the lighting device 13 is transferred to the box lower plate 14b, which serves also as the reflecting plate, and is further transferred from the lower plate 13e to the air flowing through the seedling cultivation space. An amount of the heat transferred from the lighting device 13 to the irrigation tray 31 on the upper side is very small. Accordingly, the temperature of the nutrient solution residing on the irrigation tray 31 can be controlled to be kept within a predetermined range.

In the present invention, a ratio Wb/Wa of a total cooling capacity (Wb) of all the air-conditioning units 9 to a total power consumption (Wa) of all the illumination devices (i.e., the fluorescent lamps 13c in the above-described embodiment) is preferably not less than 1 and not more than 5, more preferably not less than 1 and not more than 4, even more preferably not less than 1 and not more than 3, and most preferably not less than 1 and not more than **2.** By setting Wb/Wa to fall in the above-mentioned range, the environments in the closed space can be kept appropriate and constant, and environmental changes caused by turning-on/off of the air-conditioning units can be held smaller. Wb/Wa cab be expressed by the following formula A on an assumption that a power consumption of one illumination device such as the fluorescent lamp is denoted by Ws, the number of the illumination devices is denoted by n, and a cooling capacity of one air-conditioning unit is denoted by Wk, and the number of the installed air-conditioning units is denoted by m.

$$A = Wb/Wa$$
$$= (Wk \times m)/(Ws \times n)$$

m: number of air-conditioning units
n: number of illumination devices

The above-described embodiment is one example of the present invention, and the present invention is not limited to the above-described embodiment. For instance, the size of the room of the closed structure and the number of the multistage shelf typed cultivation apparatuses to be installed may be other than those described above. The air-conditioning unit body may be installed at a position other than the central region. The air-conditioning unit body may be installed two or more, but the number of the air-conditioning unit bodies is preferably as small as possible.

«Cultivation method»

The method for cultivating the seedlings of Solanaceae plants of the present invention uses the cultivation apparatus described above. That is, the cultivation apparatus has the light source that constitutes a spectrum indicating a wavelength range A of 400 nm or more and less than 500 nm and a wavelength range B of 500 nm or more and less than 700 nm. The photosynthetic photon flux density in the wavelength range A is 100 $\mu$mol/m$^2$/sec or more. When the total of the photosynthetic photon flux density in the wavelength range A and the photosynthetic photon flux density in the wavelength range B is 100%, the photosynthetic photon flux density in the wavelength range A is 81% or more and less than 99%.

«Sowing-germination»

In the method for cultivating seedlings of Solanaceae plants of the present invention, sowing may be carried out by the cultivation apparatus of the present invention, but it is preferable to carry out sowing in the germination chamber and transfer to the cultivation apparatus of the present invention after germination. The germination chamber preferably has a high humidity, specifically, a humidity of 80% or more, more preferably 90% or more, and particularly preferably a humidity of 99% or more. The temperature is preferably 20°C or higher and 35°C or lower, and more preferably 25°C or higher, for example, about 28°C. The germination chamber may be dark. According to this, the germination uniformity of seeds can be maintained. The germination chamber is a light-shielding structure capable of blocking sunlight and outside air, and is preferably a completely light-shielding structure surrounded by a heat-insulating wall. When cultivating from sowing to germination in a germination chamber, it is preferable to conduct moving the seedlings to a cultivation device having the lighting device and starting the cultivation of seedlings from just before to immediately after the buds appear on the surface of the medium.

«Germination-seedling»

The preferred embodiment of the cultivation apparatus used in the method for cultivating the seedlings of Solanaceae plants of the present invention is as described above.

In the method for cultivating seedlings of Solanaceae plants of the present invention, the irradiation time (light period) of light on the seedlings by the lighting device is preferably 8 hours or more and 20 hours or less per day, and particularly 12 hours or more and 18 hours or less, for example, about 14 hours. Further, the dark period in which the seedlings are not irradiated with light is preferably 4 hours or more and 16 hours or less per day, and particularly preferably 6 hours or more and 12 hours or less, for example, about 10 hours. According to this, it is possible to improve the growth condition of seedlings of Solanaceae plants, and to suppress the deterioration of seedling quality such as softening of seedlings, spindly growth, poor flowering, and the occurrence of poor growth such as yellowing of leaves and morphological abnormalities.

In the method for cultivating seedlings of Solanaceae plants of the present invention, the preferred temperature of the cultivation room in the light period is preferably 15°C or higher and 35°C or lower, more preferably 18°C or higher and 32°C or lower, particularly preferably 20°C or higher and 29°C or lower, for example, 22°C or higher and 28°C or lower. Further, in the dark period, it is preferably 7°C or higher and 25°C or lower, more preferably 10°C or higher and 23°C or lower, and particularly preferably 13°C or higher and 21°C or lower, for example, about 18°C.

In the method for cultivating seedlings of Solanaceae plants of the present invention, the preferable humidity in the cultivation room in the light period is preferably 30% or more and 90% or less, more preferably 40% or more and 80% or less, and particularly preferably 45% or more and 70% or less. Further, in the dark period, 50% or more and 100% or less are preferable, 60% or more and 95% or less are more preferable, and humidity of 70% or more and 90% or less is particularly preferable. When the humidity fluctuates due to transpiration of cultivated plants, the humidity value here means the average humidity in the light period or the dark period per day.

The above embodiment is one example of the present invention, and the present invention is not limited to the above described embodiment.

[Examples]

Hereinafter, Examples and Comparative Examples will be described. In the following Examples and Comparative Examples, plug seedlings of tomato (cultivar "Arnold") were cultivated using the cultivation apparatus having the structures shown in FIGS. 1a-9.

[Measurement of photosynthetic photon flux density]

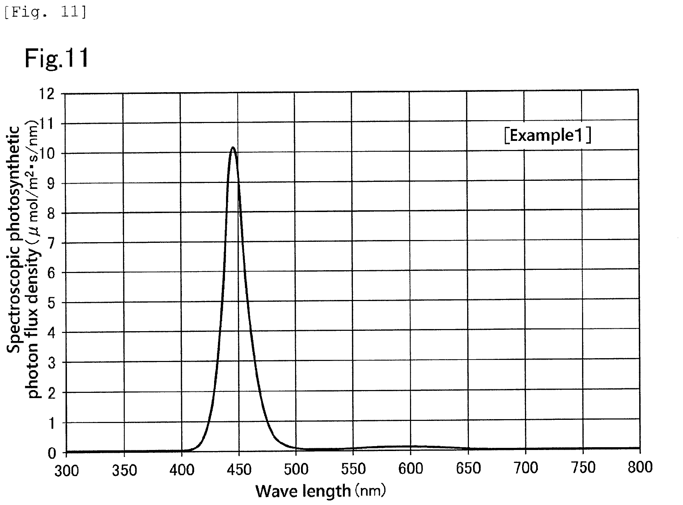

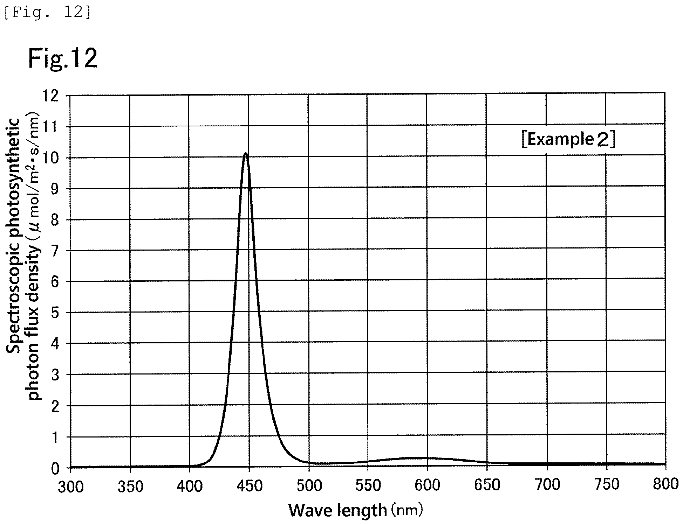

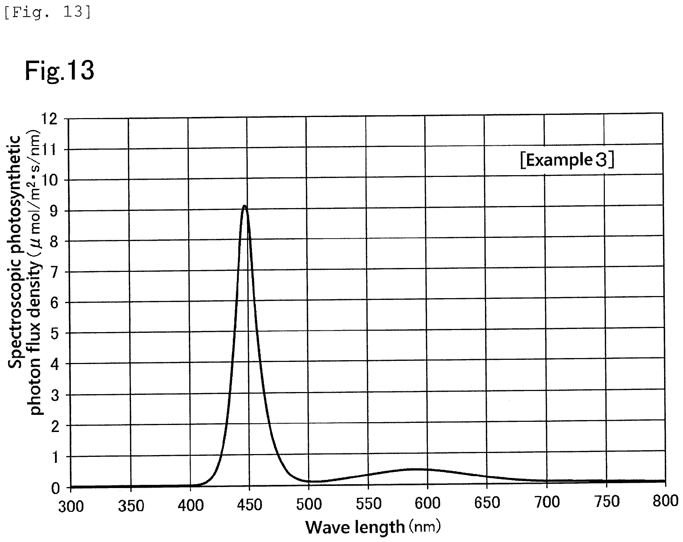

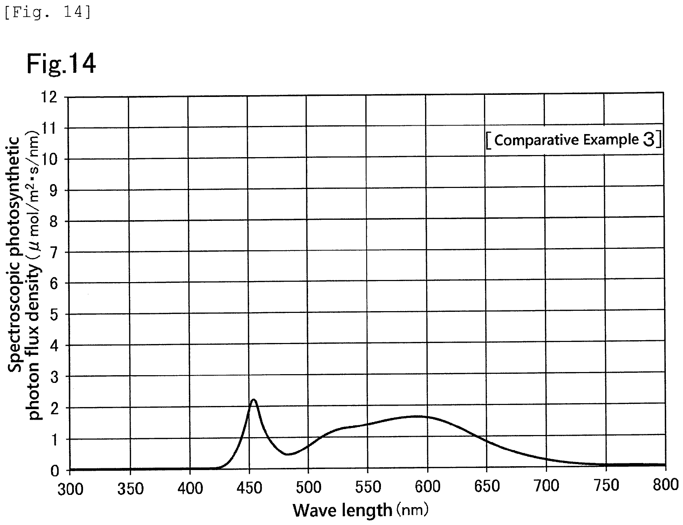

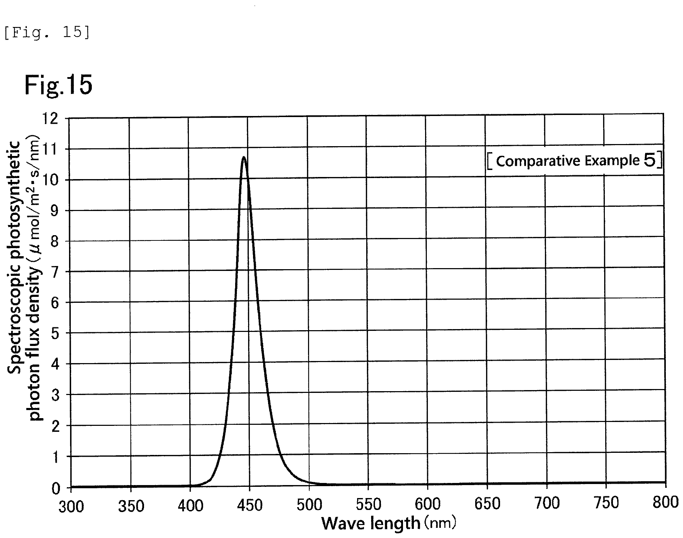

Using a spectroscopic irradiance meter (product name: S-2431 modelII) manufactured by Soma Optical Co., Ltd., the photosynthetic photon flux density in each wavelength range on the cultivated surface was measured. The light receiving surface of the spectroscopic irradiance meter was placed horizontally upward at the position of the leaf of the seedling, and the measurement was performed. The measurement results of Examples 1 to 3 and Comparative Examples 3 and 5 are shown in Figs. 11 to 15.

[Evaluation of seedling growth]

Using the cultivation apparatus including the lighting device under the conditions shown in Table 1, the lights were turned on for 14 hours per day to grow tomato seedlings. Table 1 shows the results of the number of cultivation days in which intumescence occurred and the number of cultivation days until leaf fall due to intumescence. The term "leaf fall" includes not only the case where the leaf actually falls, but also the case where the leaf is attached to the stem but hangs down from the base part of the petiole.

[Basic cultivation conditions]

<Germination room>

In each of Examples 1 to 3 and Comparative Examples 1 to 5, 36 seeds were used as samples, and media were arranged in a cell tray 40 (dimensions: back-and-forth 60 cm, width 30 cm) as 6 seeds in a back-and-forth direction and 6 seeds in a width direction, and placed in a germination chamber for 2 days after sowing. The temperature of the germination room was 28°C, and the humidity was about 90 to 100%.

<Cultivation apparatus>

In Examples 1 to 3 and Comparative Examples 1 to 5, the samples were moved to the closed structure 1 together with the cell tray 40 on the third day after sowing. The closed structure 1 has internal dimensions: length 450 cm, width 315 cm, and height 240 cm. Inside the closed structure 1, two multistage shelf typed cultivation devices 3 having four-stage and three-shelf irrigation trays 31 were installed to cultivate tomato seedlings. As the lighting device of each stage of the multistage shelf typed cultivation device 3, a lighting device having the wavelength characteristics on the plant cultivation surface shown in Table 1 was used. Further, the inner side surface of the multistage shelf typed cultivation device 3 was a reflector (white resin plate). The average humidity in the closed structure in the light period was 40-60%, and the average humidity in the dark period was 70-90%. In addition, this closed type multistage shelf typed cultivation device used was provided with an irrigation device. As for the air conditioner, one air conditioner having a cooling capacity of 14 kW was installed.

In each of Examples and Comparative Examples, the distance (height) from the lighting cover 13b to the upper surface of each cell tray 40 was set to 20 cm. The light source of the lighting device used in each Example and Comparative Example was the one shown in Table 1. Further, in both Examples and Comparative Examples, the light source of the lighting device has a photosynthetic photon flux density of less than 1 $\mu$mol/m$^2$/sec in the ultraviolet region of 200 nm or more and less than 295 nm, and a photosynthetic photon flux density of less than 1 $\mu$mol/m$^2$/sec in the ultraviolet region of 200 nm or more and less than 400 nm. Irradiation was carried out for 14 hours per day (14 hours in the light period and 10 hours in the dark period), and cultivation was carried out at a temperature of 28°C in the light period and 18°C in the dark period.

Each seedling was observed until the 14th day after sowing, and the obtained results are shown in Table 1. The mark (*) in the plant height column of Example 3 and Comparative Example 4 in Table 1 indicates that there is no observation data.

[Table 1]

| | | Example 1 | Example 2 | Example 3 | Comparative Example 1 | Comparative Example2 | Comparative Example3 | Comparative Example4 | Comparative Example5 |
|---|---|---|---|---|---|---|---|---|---|
| Photosynthetic photon flux density ($\mu$mol/m$^2$/sec) | 400 nm or more and less than 500 nm (A) | 266 | 252 | 230 | 275 | 135 | 64 | 220 | 280 |
| | 500 nm or more and less than 700 nm (B) | 14 | 28 | 54 | 210 | 470 | 222 | 3 | 3 |
| | Ratio of (A) (%) | 95% | 90% | 81% | 57% | 22% | 22% | 99% | 99% |
| | (A) + (B) Total | 280 | 280 | 284 | 485 | 605 | 286 | 223 | 283 |
| First emission peak wavelength (A) | Peak (nm) | 447 | 447 | 447 | 454 | 454 | 454 | 447 | 447 |
| | Half width (nm) | 22 | 22 | 22 | 23 | 22 | 19 | 22 | 22 |
| Second emission peak wavelength (B) | Peak (nm) | 587 | 587 | 587 | 594 | 594 | 594 | none | none |
| Number of cultivation days in which intumescence occurred (days) | | Not occur | Not occur | 14 | 12 | 10 | 8 | Not occur | Not occur |
| Number of cultivation days until leaf fall (days) | | Not occur | Not occur | 14 | 14 | 12 | 10 | Not occur | Not occur |
| Growth condition of seedlings on the 14th day after sowing | Evaluation | Good | Very good | Good | Intumescence × | Intumescence × | Intumescence × | Spindly growth × | Spindly growth × |
| | Plant height (cm) | 10 | 8 | (*) | 6 | 7 | 8 | (*) | 15 |
| | Number of true leaves (Number) | 3 | 3 | 3 | 3 | 3 | 3 | 3 | 3 |

EP 3 821 698 B1

14

As shown in Table 1, the plug seedlings of Examples 1 and 2 did not develop intumescence in any of the seedlings arranged at the central portion and the end portion, and seedlings were cultivated in a good growing state. In particular, in Example 2, fine and good seedlings were grown in which the growth of petioles and hypocotyls was further suppressed. In Example 3, several seedlings developed mild intumescence on the 14th day after sowing, and the cotyledons of several seedlings fell, but at this time, the seedlings had already grown sufficiently. In Example 3, when the seedlings were planted as grafts or transplanted seedlings in other cultivation sites by the 13th day (two true leaves), which was the earlier stage, almost all the seedlings did not develop intumescence. On the other hand, in Comparative Examples 1 to 3, intumescence developed at an early stage in almost all seedlings, and serious growth disorders such as yellowing and leaf fall occurred. Further, in Comparative Examples 4 and 5, although intumescence did not occur, the seedlings were in spindly growth and the growing condition was not preferable.

[Reference Sings List]

1 closed structure
3-8 multistage shelf typed cultivation apparatus
3a side panel
3b rear panel
3c pedestal
3e top panel
9 air conditioning unit
9A air conditioning unit body
9a inlet
9b outlet
9f blow-off opening
10 air guide panel
10a aperture
12 seedling cultivation rack
13 lighting device
13a light source
13b cover
13c case
13s switch
15 air fan
16 carbon dioxide gas cylinder
30, 30' irrigation device
31 irrigation tray
31d lower plate
32 drain pit
32a drain opening
33 feed pipe
33a small hole
34 dam
34a cutout
35 rib
40 cell tray
41 cell
42 cell hole
50 under tray
51 small hole
52 projection

## Claims

1. A multistage shelf type cultivation apparatus (3-8) for cultivating plug seedlings of a Solanaceae plant equipped with a lighting device,

the cultivation apparatus having a shelf, the shelf having an inner side surface, the inner side surface of the shelf being a reflector,

wherein the lighting device (13) has a light source (13a) that constitutes a spectrum showing a wavelength range A of 400 nm or more and less than 500 nm and a wavelength range B of 500 nm or more and less than 700 nm; **characterized in that**

the photosynthetic photon flux density in the wavelength range A is 100 $\mu$mol/m$^2$/sec or more; further **characterized in that**,

when the total of the photosynthetic photon flux density in the wavelength range A and the photosynthetic photon flux density in the wavelength range B is 100%, the photosynthetic photon flux density in the wavelength range A is 81% or more and less than 99%.

2. The cultivation apparatus according to claim 1, wherein the lighting device does not substantially irradiate light in the ultraviolet region.

3. The cultivation apparatus according to claim 1 or 2, wherein the lighting device is an LED lighting device.

4. The cultivation apparatus according to any one of claims 1 to 3, wherein the lighting device has at least one peak of photosynthetic photon flux density in a wavelength range of 400 nm or more and less than 500 nm.

5. The cultivation apparatus according to any one of claims 1 to 4,

wherein the cultivation device is arranged in a closed structure (1);
wherein an air conditioning unit (9) is provided to air-condition the inside of the closed structure; and
wherein an irrigation device (30, 30') for irrigating the seedlings is provided.

6. A cultivation method for cultivating seedlings of a Solanaceae plant, the method comprising cultivating seedlings of a Solanaceae plant using the cultivation apparatus according to any one of claims 1 to 5.

7. The cultivation method according to claim 6, wherein the seedling of the Solanaceae plant is a tomato plant.

8. The cultivation method according to claim 7, wherein the seedling of the Solanaceae plant is a rootstock variety for grafting.

9. The cultivation method according to any one of claims 6 to 8, wherein the seedlings of the Solanaceae plant are cultivated up to a growth stage of a plant height of 3 cm or more or one or more true leaves.

10. The cultivation method according to any one of claims 6 to 9, wherein the seedlings are cultivated in a closed structure where humidity is 30% or more and 100% or less.

11. A method for cultivating plug seedlings using the cultivation method according to any one of claims 6 to 10.

**Patentansprüche**

1. Mehrstufige regalartige Kultivierungseinrichtung (3-8) zum Kultivieren von Sämlingssteckern einer Nachtschattenpflanze, die mit einer Beleuchtungsvorrichtung ausgestattet ist,

wobei die Kultivierungseinrichtung ein Regal aufweist, wobei das Regal eine innenseitige Oberfläche aufweist, wobei die innenseitige Oberfläche des Regals ein Reflektor ist,
wobei die Beleuchtungsvorrichtung (13) eine Lichtquelle (13a) aufweist, die ein Spektrum bildet, das einen Wellenlängenbereich A von 400 nm oder mehr und weniger als 500 nm und einen Wellenlängenbereich B von 500 nm oder mehr und weniger als 700 nm zeigt;
**dadurch gekennzeichnet, dass**
die photosynthetische Photonenstromdichte im Wellenlängenbereich A 100 $\mu$mol/m$^2$/Sek oder mehr beträgt;
weiter **dadurch gekennzeichnet, dass**,
wenn die gesamte photosynthetische Photonenstromdichte im Wellenlängenbereich A und die photosynthetische Photonenstromdichte im Wellenlängenbereich B 100 % beträgt, die photosynthetische Photonenstromdichte im Wellenlängenbereich A 81 % oder mehr und weniger als 99 % beträgt.

**2.** Kultivierungseinrichtung nach Anspruch 1, wobei die Beleuchtungsvorrichtung im Wesentlichen kein Licht im Ultraviolettbereich ausstrahlt.

**3.** Kultivierungseinrichtung nach Anspruch 1 oder 2, wobei die Beleuchtungsvorrichtung eine LED-Beleuchtungsvorrichtung ist.

**4.** Kultivierungseinrichtung nach einem der Ansprüche 1 bis 3, wobei die Beleuchtungsvorrichtung mindestens eine Spitze von photosynthetischer Photonenstromdichte in einem Wellenlängenbereich von 400 nm oder mehr und weniger als 500 nm aufweist.

**5.** Kultivierungseinrichtung nach einem der Ansprüche 1 bis 4,

> wobei die Kultivierungsvorrichtung in einer geschlossenen Struktur (1) angeordnet ist;
> wobei eine Klimaanlageneinheit (9) bereitgestellt ist, um das Innere der geschlossenen Struktur zu klimatisieren; und
> wobei eine Bewässerungsvorrichtung (30, 30') zum Bewässern der Sämlinge breitgestellt ist.

**6.** Kultivierungsverfahren zum Kultivieren von Sämlingen einer Nachtschattenpflanze, wobei das Verfahren Kultivieren von Sämlingen einer Nachtschattenpflanze unter Verwendung der Kultivierungseinrichtung nach einem der Ansprüche 1 bis 5 umfasst.

**7.** Kultivierungsverfahren nach Anspruch 6, wobei der Sämling der Nachtschattenpflanze eine Tomatenpflanze ist.

**8.** Kultivierungsverfahren nach Anspruch 7, wobei der Sämling der Nachtschattenpflanze eine Wurzelstocksorte zum Aufpfropfen ist.

**9.** Kultivierungsverfahren nach einem der Ansprüche 6 bis 8, wobei die Sämlinge der Nachtschattenpflanze bis zu einer Wachstumsstufe einer Pflanzenhöhe von 3 cm oder mehr oder einem oder mehreren echten Blättern kultiviert werden.

**10.** Kultivierungsverfahren nach einem der Ansprüche 6 bis 9, wobei die Sämlinge in einer geschlossenen Struktur kultiviert werden, in der die Feuchtigkeit 30 % oder mehr und 100 % oder weniger beträgt.

**11.** Verfahren zum Kultivieren von Sämlingssteckern unter Verwendung des Kultivierungsverfahrens nach einem der Ansprüche 6 bis 10.

**Revendications**

**1.** Appareil de culture de type étagère multi-étage (3-8) permettant de cultiver des semis en douille d'une plante solanacée équipé d'un dispositif d'éclairage,

> l'appareil de culture présentant une étagère, l'étagère présentant une surface latérale intérieure, la surface latérale intérieure de l'étagère étant un réflecteur,
> dans lequel le dispositif d'éclairage (13) présente une source de lumière (13a) qui constitue un spectre montrant une plage de longueurs d'onde A de 400 nm ou plus et moins de 500 nm et une plage de longueurs d'onde B de 500 nm ou plus et moins de 700 nm ;
> **caractérisé en ce que**
> la densité de flux de photons photosynthétiques dans la plage de longueurs d'onde A est 100 $\mu$mol/m$^2$/s ou plus ;
> en outre **caractérisé en ce que**,
> lorsque le total de la densité de flux de photons photosynthétiques dans la plage de longueurs d'onde A et de la densité de flux de photons photosynthétiques dans la plage de longueurs d'onde B est 100 %, la densité de flux de photons photosynthétiques dans la plage de longueurs d'onde A est 81 % ou plus et moins de 99 %.

**2.** Appareil de culture selon la revendication 1, dans lequel le dispositif d'éclairage n'irradie pas substantiellement une lumière dans la région ultraviolette.

**3.** Appareil de culture selon la revendication 1 ou 2, dans lequel le dispositif d'éclairage est un dispositif d'éclairage à LED.

4. Appareil de culture selon l'une quelconque des revendications 1 à 3, dans lequel le dispositif d'éclairage présente au moins un pic de densité de flux de photons photosynthétiques dans une plage de longueurs d'onde de 400 nm ou plus et moins de 500 nm.

5. Appareil de culture selon l'une quelconque des revendications 1 à 4,

dans lequel le dispositif de culture est agencé dans une structure fermée (1) ;
dans lequel une unité de climatisation (9) est prévue pour climatiser l'intérieur de la structure fermée ; et
dans lequel un dispositif d'irrigation (30, 30') permettant d'irriguer les semis est prévu.

6. Procédé de culture permettant de cultiver des semis d'une plante solanacée, le procédé comprenant la culture de semis d'une plante solanacée en utilisant l'appareil de culture selon l'une quelconque des revendications 1 à 5.

7. Procédé de culture selon la revendication 6, dans lequel le semis de la plante solanacée est une plante de tomate.

8. Procédé de culture selon la revendication 7, dans lequel le semis de la plante solanacée est une variété de porte-greffe pour le greffage.

9. Procédé de culture selon l'une quelconque des revendications 6 à 8, dans lequel les semis de la plante solanacée sont cultivés jusqu'à une étape de croissance d'une hauteur de plante de 3 cm ou plus ou d'une ou plusieurs feuilles vraies.

10. Procédé de culture selon l'une quelconque des revendications 6 à 9, dans lequel les semis sont cultivés dans une structure fermée où l'humidité est 30 % ou plus et 100 % ou moins.

11. Procédé de culture de semis en douille utilisant le procédé de culture selon l'une quelconque des revendications 6 à 10.

[Fig. 1]

## Fig.1a

## Fig.1b

[Fig. 2]

## Fig.2a

## Fig.2b

[Fig. 3]

# Fig.3

[Fig. 4]

# Fig.4

[Fig. 5]

**Fig.5**

[Fig. 6]

**Fig.6**

[Fig. 7]

# Fig.7

[Fig. 8]

# Fig.8

[Fig. 9]

# Fig.9

[Fig. 10]

# Fig.10

[Fig. 11]

## Fig.11

[Fig. 12]

# Fig.12

[Fig. 13]

# Fig.13

[Fig. 14]

# Fig.14

[Fig. 15]

# Fig.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016202072 A
- JP 2016202050 A
- JP 2016202124 A